(19) Europäisches Patentamt / European Patent Office / Office européen des brevets

(11) **EP 3 781 458 B1**

(12) **EUROPÄISCHE PATENTSCHRIFT**

(45) Veröffentlichungstag und Bekanntmachung des Hinweises auf die Patenterteilung:
**16.08.2023   Patentblatt 2023/33**

(21) Anmeldenummer: **19725268.7**

(22) Anmeldetag: **16.04.2019**

(51) Internationale Patentklassifikation (IPC):
**B62D 15/02** *(2006.01)*      **B62D 13/00** *(2006.01)*
**B62D 13/04** *(2006.01)*

(52) Gemeinsame Patentklassifikation (CPC):
**B62D 13/00; B62D 13/04; B62D 15/024**

(86) Internationale Anmeldenummer:
**PCT/DE2019/100349**

(87) Internationale Veröffentlichungsnummer:
**WO 2019/201394 (24.10.2019 Gazette 2019/43)**

(54) **VERFAHREN ZUR KURVENRADIUSERMITTLUNG**

METHOD FOR DETERMINING A TURNING RADIUS

PROCÉDÉ DE DÉTERMINATION DU RAYON D'UNE COURBE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2018   DE 102018003170**
**08.04.2019   DE 102019109191**

(43) Veröffentlichungstag der Anmeldung:
**24.02.2021   Patentblatt 2021/08**

(73) Patentinhaber: **LEMKEN GmbH & Co. KG**
**46519 Alpen (DE)**

(72) Erfinder:
• **BIRO, Györy Josef**
**49549 Ladbergen (DE)**
• **MÜLLER, Christoph**
**49492 Westerkappeln (DE)**

(56) Entgegenhaltungen:
**EP-A1- 3 090 922     WO-A1-2016/058595**

**Beschreibung**

Die vorliegende Erfindung bezieht sich auf ein Verfahren zur Ermittlung eines Kurvenradiusses eines an ein Zugfahrzeug angehängten und von diesem bewegten Anhängers mit einer Recheneinheit, die mit einer Messsensorik verbunden ist, die Sensordaten über aktuelle Bewegungen des Anhängers an die Recheneinheit übermittelt und die von der Recheneinheit bei der Ermittlung des Kurvenradiusses berücksichtigt werden. Die Erfindung bezieht sich auch auf einen Anhänger, der mit einer Vorrichtung ausgestattet ist, die ein solches Verfahren anwendet.

Bei Anhängern, die von einem Zugfahrzeug bewegt werden, ist es häufig wünschenswert, dass die Räder des Anhängers möglichst genau der Spur folgen, in der die Räder des Zugfahrzeugs gerollt sind. Ein großes Anwendungsgebiet findet sich beispielsweise in der Landtechnik. Mit einem eigenen Radfahrwerk versehene Anhänger, die von einem Traktor gezogen werden und mit denen Bodenbearbeitungs-, Sä-, Dünge-, Spritz- oder Erntearbeiten ausgeführt werden, sollen mit ihren Rädern möglichst genau in der Spur des Traktors rollen, um eine unnötige Bodenverdichtung und/oder Schäden am Pflanzenbestand zu vermeiden. Bei der Feldarbeit wird kontinuierlich der Kurvenradius ermittelt, in dem sich der Anhänger bewegt, und mit dem Kurvenradius des Traktors verglichen, um bei Abweichungen den Anhänger aktiv so zu lenken, dass sich dessen Bewegungsbahn wieder der Bewegungsbahn des Traktors annähert oder sogar angleicht.

Ein Beispiel für ein solches Verfahren ist in der Schrift EP 2 145 813 A1 offenbart. Zur Lenkung des Anhängers werden die Winkelgeschwindigkeit des Zugfahrzeugs und die Bahngeschwindigkeit des Anhängers ermittelt. In Abhängigkeit von den Messwerten steuert eine Steuereinrichtung den Lenkeinschlag der lenkbaren Achse des Anhängers. Als Messsensorik zur Ermittlung der Winkelgeschwindigkeit des Zugfahrzeugs wird ein Gyroskop verwendet. Die Bahngeschwindigkeit des Anhängers kann mittels Drehzahlsensoren an mindestens einem Rad ermittelt werden.

Aus der Schrift DE 199 42 034 A1 ist es bekannt, einen über eine Deichsel mit einem Traktor verbundenen Anhänger in der Traktorspur zu führen, indem eine Lenkvorrichtung für den Anhänger von einer Steuervorrichtung Ausgangssignale übermittelt bekommt, die die Steuervorrichtung in Abhängigkeit von Sensorsignalen zuvor ermittelt hat. Als Sensorsignale werden die Signale eines Gyroskops zur Messung der Winkelgeschwindigkeit des Zugfahrzeugs, ein Messwertaufnehmer zur Messung des Zugmaulwinkels, des Knickwinkels oder des Achsschenkelwinkels, ein Sensor zur Ermittlung der Neigung des Anhängers sowie ein Wegsensor vorgeschlagen.

Die Schrift EP 2 679 470 B1 offenbart ein System, welches die Kurvenfahrt des Schleppers über den ISOBUS auf den Anhänger überträgt und daraus die Lenksignale für die Lenkung des Anhängers generiert.

Bei den in den vorgenannten Schriften offenbarten Lösungen ist es erforderlich, Messwerte und Daten zwischen dem Zugfahrzeug und dem Anhänger auszutauschen und mit der Steuervorrichtung auszuwerten. Es ist eine elektronische, mechanische oder hydraulische Verbindung zum Zugfahrzeug erforderlich. Da in der Landwirtschaft viele Traktoren unterschiedlichen Alters, unterschiedlicher Fabrikate und mit unterschiedlicher technischer Ausstattung betrieben werden, an die Anhänger angehängt werden können, ist es unsicher, ob ein Anhänger, der eine Lenkvorrichtung mit einer Steuervorrichtung zur Spurführung in der Traktorspur aufweist, die im Rahmen eines Datenaustausches mit dem Traktor benötigten Sensordaten tatsächlich von dort übermittelt bekommt.

In der Schrift EP 3 090 922 A1 ist nun für ein gattungsgemäßes Verfahren vorgeschlagen, eine Bewegung des Anhängers mit mindestens einer ausschließlich dem Anhänger funktional und/oder räumlich zugeordneten Sensoreinheit zu erfassen, die Sensordaten während einer Fahrbewegung zur Gewinnung von Steuerdaten auszuwerten und dadurch einen Anhänger in der Spur des Zugfahrzeugs zu führen. Es ist beschrieben, dass die Bewegung des Anhängers mittels wenigstens eines Gyroskops und/oder eines Beschleunigungssensors ermittelt wird. Als weitere mögliche Sensoren werden Inertialsensoren und/oder Sensoren zur Bestimmung der Geschwindigkeit und/oder Beschleunigung vorgeschlagen. Es fehlen nähere Ausführungen dazu, wie die Sensorwerte dieser Sensoren generiert und ausgewertet werden. Es bleibt somit offen, wie ein möglichst kostengünstig aufgebautes System mit geringem Bauaufwand realisiert werden kann.

In der Schrift DE 10 2017 205 291 A1 ist eine Vorrichtung offenbart, mit der Bewegungen eines Verteilgestänges einer landwirtschaftlichen Ausbringmaschine durch die aktive Ansteuerung eines Aktors verringert oder ganz getilgt werden sollen. Um den Aktor passend ansteuern zu können, ist es erforderlich, die Geschwindigkeit und/oder Bewegungsrichtung des Anhängers zu ermitteln. Des Weiteren offenbart die WO 2016/058595 A1 den Oberbegriff des unabhängigen Anspruchs.

Es ist die Aufgabe der vorliegenden Erfindung, ein Verfahren zur Ermittlung eines Kurvenradiusses eines an ein Zugfahrzeug angehängten und von diesem bewegten Anhängers vorzuschlagen, das bei einem kostengünstigen Aufbau eine zuverlässig und gut funktionierende Lenkung des Anhängers zumindest annähernd in der Spur des Zugfahrzeugs ermöglicht.

Die Aufgabe wird für ein gattungsgemäßes Verfahren gelöst, indem die Messsensorik Sensoren aufweist, mit denen in einem Zeitintervall zurückgelegte Drehwinkel und/oder Wegstrecken von auf gegenüberliegenden ersten und zweiten Seiten des Anhängers befindlichen ersten und zweiten Rädern gemessen werden, der erste Sensorwert vom ersten Rad auf der ersten Seite des Anhängers mit dem zweiten Sensorwert vom zweiten Rad auf der zweiten Seite des Anhängers verrechnet wird, um einen Rechenwert zu bilden, und der Rechenwert von der Recheneinheit unter Berücksichtigung eines Werts für die Spurweite der miteinander verglichenen ersten und zweiten Räder zu einem Wert für den aktuellen Kurvenradius des Anhängers verrechnet wird.

Die vorliegende Erfindung nutzt die bei einer Kurvenfahrt auftretenden Wegdifferenzen zwischen dem linken und dem rechten Rad einer Achse, um den daraus resultierenden Kurvenradius des Anhängers zu ermitteln. Der Rechenwert kann aus der Differenz zwischen den Sensorwerten für das linke und rechte Rad ermittelt werden, oder es handelt sich um einen Quotienten, der eine Relation zwischen den Drehzahlwerten darstellt. Die Sensorwerte werden den an die Recheneinheit übermittelten Sensordaten entnommen. Bei einer Verrechnung des Rechenwertes mit der Spurweite zwischen den Rädern errechnet sich daraus der Kurvenradius, mit dem der Anhänger bewegt wird. Der so ermittelte Kurvenradius bildet dann einen Eingangswert zur Ansteuerung von Aktoren, die zur Steuerung des Anhängers genutzt werden. Dabei kann es sich um Aktoren handeln, die beispielsweise an der Deichsel angebracht sind, um den Deichselwinkel im Verhältnis zum Zugfahrzeug zu verändern, und/oder den Einschlagwinkel an den Rädern und/oder den Drehwinkel von einer oder mehreren Achsen im Verhältnis zum Anhänger zu verändern, um dadurch dem Zugfahrzeug spurgenau zu folgen.

Die Berechnung geht von den folgenden Formeln aus:

$$R = \frac{d(v_l + v_r)\cos\alpha}{2(v_r - v_l)} \quad bzw. \ R = \frac{d(\omega_l + \omega_r)\cos\alpha}{2(\omega_r - \omega_l)}$$

Der Drehpunkt, um den der Anhänger mit dem Kurvenradius R für die Achse dreht, deren Räder mit den Sensoren gemessen werden, liegt dabei in einer Verlängerung der Drehachse, um die die gemessenen Räder des Anhängers drehen. Bei den Werten $\omega_l$ und $\omega_r$ handelt es sich um die in einem Zeitintervall gemessenen Werte für die Drehwinkel der linken und rechten Räder. d ist die Spurweite der beiden Räder. $\alpha$ ist der Mittelwert des Lenkwinkels des Anhängers, der gebildet wird aus den Lenkwinkeln für das rechte und linke Rad. $v_l$ und $v_r$ sind die im Zeitintervall gemessenen Wegstrecken rechts und links.

Der Knickwinkel zwischen der Zugfahrzeug und dem Anhänger kann nach der folgenden Formel berechnet werden:

$$\beta = atan(\frac{l + R\sin\alpha}{R\cos\alpha})$$

Dabei ist $\beta$ der Knickwinkel und l ist der Abstand zwischen der gemessenen Anhängerachse und dem Drehpunkt, um den das Zugmaul der Anhängerdeichsel in der Anhängekupplung der Zugfahrzeug dreht. l kann aber auch der Abstand zwischen der gemessenen Anhängerachse und dem Drehpunkt der Hinterachse des Zugfahrzeugs oder einem angenommenen Wert dazwischen sein, wenn der Abstand zwischen der Anhängekupplung am Zugfahrzeug und dem Drehpunkt der Hinterachse oder dem angenommenen Punkt gering ist und sich daraus somit nur ein geringer Fehler in der Berechnung des Kurvenradiusses ergibt.

Bei geradeaus rollenden Rädern ist der mittlere Lenkwinkel $\alpha$ = 0. Daraus folgen die Werte $\cos\alpha$ = 1 und $\sin\alpha$ = 0. Die grundlegende Berechnung des Kurvenradiusses lautet deshalb

$$R = \frac{d(v_l + v_r)}{2(v_r - v_l)} \quad bzw. \ R = \frac{d(\omega_l + \omega_r)}{2(\omega_r - \omega_l)}$$

Da sowohl die gefahrenen Wege als auch die Geschwindigkeiten als in einem Zeitintervall gefahrene Wege sich konstant proportional verhalten, kürzen sich diese über die jeweiligen Brüche hinaus weg.

Das vorgeschlagene Verfahren kommt ohne jegliche elektronische, mechanische oder hydraulische Verbindung zum Zugfahrzeug zur Erfassung eines Kurvenradiusses des Anhängers aus. Das Verfahren ermöglicht den Einsatz sehr kostengünstiger und weit erprobter Sensorik. Es ergeben sich Kostenvorteile in der Maschinenproduktion der Anhänger, Funktionsvorteile durch die Vermeidung von zusätzlichen Elektronikeinheiten auf dem Zugfahrzeug und Vorteile im Betrieb und in der Wartung der Anhänger durch eine einfach gehaltene Sensorik.

Die Recheneinheit ist mit einer geeigneten elektronischen Hard- und Software ausgestattet, mit der die vorgeschlagenen Verfahrensschritte automatisiert im laufenden Betrieb abgearbeitet werden können. Die Software kann auf die beschriebene Weise laufend den Kurvenradius des Anhängers bestimmen, mit dem der Anhänger hinter einem Zugfahrzeug hängend bewegt wird. Ist der Kurvenradius des Anhängers bekannt, kann aus weiteren geometrischen Daten des Gespanns auch der Kurvenradius und damit die Fahrtrichtung des Zugfahrzeugs bestimmt werden. Auf dieser Datenbasis ist es dann einfach, aus dem Kurvenradius des Anhängers mit der Recheneinheit ein Steuerungssignal zu generieren, mit dem der Anhänger sehr genau in der Fahrspur des Zugfahrzeugs geführt werden kann. Es ist aber auch möglich, beispielsweise zur Bodenschonung, den Anhänger auf der Datenbasis der Recheneinheit auf einer Fahrspur zu halten, die seitlich versetzt ist zur Fahrspur des Zugfahrzeugs.

Mit der Erfindung ist insbesondere die sensorische Erfassung einer Kurvenfahrt eines Zugfahrzeugs und die daraus resultierende spurtreue Lenkung eines Anhängefahrzeugs mit Hilfe von Sensoren an zwei sich an beiden Fahrzeugseiten gegenüberliegenden Rädern eines Anhängers möglich, wobei ggf. zusätzliche Sensoren und andere geeignete technische Mittel zur Genauigkeitsverbesserung eingesetzt werden können. Dabei ist es im Prinzip gleichgültig, ob der Anhänger von einem Zugfahrzeug gezogen wird, bei dem nur die Räder der Vorderachse lenkbar sind, ob es sich um ein Zugfahrzeug mit Allrad- oder Knicklenkung handelt oder ob das Zugfahrzeug auf Raupen läuft, die zu Lenkzwecken auf einer oder beiden Seiten beschleunigt oder gebremst werden.

Die Erfindung ist anwendbar auf Anhänger, die als Einachsfahrzeuge oder Mehrachsfahrzeuge mit unterschiedlichsten Achs- und Lenkanordnungen ausgebildet sind.

Die verwendeten Sensoren können insbesondere als Impulszähler ausgestaltet sein, die bei einer Drehung des ausgewerteten Rades in einem Zeitintervall die Anzahl der dabei gemessenen Impulse zählen. Die Impulszähler können nach beliebigen physikalischen Prinzipien funktionieren, so gibt es beispielsweise optische, elektrische oder mechanische Impulszähler. Als Impulsgeber können beispielsweise Loch- oder Zahnscheiben oder gezahnte Ringe auf einem jeweiligen Rad verwendet werden, die über einen Induktions- oder Hallsensor berührungslos abgetastet werden, oder es werden sonstige Messsysteme verwendet, mit denen Impulse während einer Drehbewegung eines Rades abgefragt werden können. Wenn ein Rad beispielsweise mit einem Impulszähler ausgestattet ist, der bei einer vollen Umdrehung des Rades um 360° 36 Impulse liefert, entspricht ein Impuls einer Drehung des ausgewerteten Rades um 10°. Bei beispielsweise zwölf Impulsen hat sich ein erstes von einem Sensor ausgewertetes Rad um ein Drittel seines Umfangs fortbewegt. Je nachdem, welchen Radius und welchen daraus folgenden Umfang das vom Sensor überwachte Rad hat, können die gemessenen zwölf Pulse schnell in eine zurückgelegte Wegstrecke in cm oder m umgerechnet werden.

Wurden in diesem Beispiel zeitgleich für das zweite Rad sechzehn Impulse gemessen, so ist klar, dass das zweite Rad schneller dreht und sich auf der Kurvenaußenseite befindet. Ist das erste Rad auf der in Fahrtrichtung gesehen linken Seite des Anhängers und das zweite Rad auf der in Fahrtrichtung gesehen rechten Seite, bewegt sich der Anhänger in einer Kurvenfahrt nach links. Ist dann noch der Abstand zwischen dem inneren und dem äußeren Rad bekannt, so kann aus diesen Werten der Kurvenradius errechnet werden, mit dem der Anhänger aktuell bewegt wird. Je größer die Differenz zwischen den Zahlen für die gemessenen Impulse ist, umso enger ist die Kurve und umso geringer der Kurvenradius, in dem sich der Anhänger bewegt, und je geringer die Differenz zwischen den auf der Kurveninnen- und Kurvenaußenseite in einem Zeitintervall gezählten Impulse der beiden überwachten Räder ist, umso mehr fährt der Anhänger aktuell geradeaus. Fehlt es an einer Differenz, fährt der Anhänger geradeaus.

Die Impulse können auch mit einer höheren oder niedrigeren Auflösung erzeugt werden, indem die Zahl der Impulsgeber an den überwachten Rädern erhöht oder verringert wird. Je feiner die Auflösung der Sensoren ist, umso genauer kann der aus den Sensorwerten errechnete Kurvenradius berechnet werden. Bei nur einem einzigen Impuls pro Radumdrehung ist der Rechenwert und damit der errechnete aktuelle Radius natürlich nur sehr ungenau. In der Praxis sollte eine Auflösung gewählt werden, die eine ausreichend genaue Anzahl von Impulsen während einer Radumdrehung liefert, die sich auch unter den harten Einsatzbedingungen in der Landwirtschaft nicht mit Fremdkörpern zusetzt und die ein gutes Preis-/Leistungs-verhältnis ermöglicht.

Nach einer Ausgestaltung der Erfindung berücksichtigt die Recheneinheit bei der Verrechnung die Bewegungsrichtung des Anhängers und/oder der ersten und zweiten Räder. Durch die Erfassung der Bewegungsrichtung werden Auswertefehler vermieden, wenn sich die Räder gegensinnig drehen oder der Anhänger mit dem Zugfahrzeug in Rückwärtsfahrt bewegt werden. Die Erkennung der richtigen Bewegungsrichtung ist auch wichtig, um ein korrektes Lenksignal nach rechts oder links geben zu können. Wenn das Vorzeichen eines Sensorwertes als Angabe für die Bewegungsrichtung eines oder beider Räder nicht stimmt, könnte ein auf Basis des ermittelten Rechenwertes generiertes Lenksignal in genau die falsche Richtung weisen.

Nach einer Ausgestaltung der Erfindung sind das erste Rad und das zweite Rad einer gemeinsamen Achse zugehörig. Durch die Auswertung der Drehzahlen der Räder an einer Achse ist die Verrechnung der Sensorwerte vereinfacht, weil kein Längsversatz zwischen dem ersten und zweiten Rad in Fahrtrichtung des Anhängers im Rechenmodell berücksichtigt werden muss.

Nach einer Ausgestaltung der Erfindung berücksichtigt die Recheneinheit einen Sensorwert für die Geschwindigkeit, mit der der Anhänger bewegt wird. Durch die Berücksichtigung eines Sensorwertes für die Geschwindigkeit können Lenkausschläge in ihrer Stärke besser an die Geschwindigkeit angepasst werden, um zu heftige oder zu geringe Lenkausschläge in Situationen, in denen der Anhänger Lenkbewegungen der Zugmaschine folgen soll, zu vermeiden.

Nach einer Ausgestaltung der Erfindung ist die Recheneinheit über eine Schnittstelle mit einem externen Gerät verbunden, das ein Wegsignal erzeugt und dieses an die Recheneinheit übermittelt, die Recheneinheit vergleicht das übermittelte Wegsignal mit einem errechneten Wert, der aus den Sensorwerten für den in einem Zeitintervall zurückgelegten Drehwinkel und/oder die Wegstrecke ermittelt worden ist, und generiert bei einer Differenz zwischen dem Wegsignal und dem aus den Sensorwerten errechneten Wert ein Korrektursignal, mit dem die Sensorwerte und/oder der Rechenwert verrechnet werden. Als externes Gerät kommt beispielsweise ein Navigationssystem oder ein sonstiges GNSS-System in Betracht, das auch Werte für die vom Zugfahrzeug aktuell gefahrene Geschwindigkeit erzeugt, oder ein im Zugfahrzeug verbautes Modul, wie beispielsweise Drehzahlsensoren im Getriebe, in den Achsen oder den Rädern oder Geschwindigkeitssensoren, wie beispielsweise Radarsensoren, mit denen die gefahrene Geschwindigkeit des Zugfahrzeugs ermittelt wird. Durch einen Vergleich der von diesen externen Geräten erzeugten Geschwindigkeitssignale mit dem errechneten Wert, der ebenfalls einen Wert für die aktuell gefahrene Geschwindigkeit darstellt, kann die Recheneinheit feststellen, ob die Räder des Anhängers mit Schlupf behaftet sind. Über das Korrektursignal ist es möglich, schlupfbedingt fehlerhafte Rechenwerte zu korrigieren. Ohne eine Korrektur könnten sich sonst bei auftretendem Schlupf fehlerhafte Werte für den errechneten Kurvenradius ergeben, die zu fehlerhaften Lenksignalen führen könnten.

Nach einer Ausgestaltung der Erfindung verwendet die Recheneinheit zur Ermittlung des Rechenwertes einen oder mehrere softwaregestützte probabilistische Filter. Probabilistische Filter dienen dazu, Fehler in realen Messwerten zu reduzieren und Schätzungen für nicht messbare Systemgrößen zu liefern. Voraussetzung dabei ist, dass die interessierenden Werte durch ein mathematisches Modell beispielsweise in Form von Bewegungsgleichungen beschrieben werden können. In den Filtern können spezielle mathematische Strukturen verwendet werden, die den Einsatz in Echtzeitsystemen verschiedener technischer Bereiche ermöglichen. Die probabilistischen Filter dienen dazu, die Verarbeitung von Sensordaten oder Sensorwerten zu vermeiden, die mit einiger Sicherheit als fehlerhaft eingestuft werden können. Genauso können die probabilistischen Filter dazu dienen, zeitlich begrenzte Ausfälle in der Ermittlung von Messwerten zu überbrücken. Die probabilistischen Filter dienen dazu, die Bewegungsbahn des sich bewegenden Anhängers zu glätten und Lenkbewegungen und extreme Lenkausschläge zu vermeiden, die bei einem Tracking des Anhängers und/oder des Zugfahrzeugs als unnormal erscheinen.

Nach einer Ausgestaltung der Erfindung sind das erste und zweite Rad aktiv gelenkt. Die aktive Lenkung kann beispielsweise mittels einer Achsschenkellenkung erfolgen, die über einen Aktor wie beispielsweise einen Hydraulikzylinder oder einen elektrischen Stellmotor verstellt wird. Die Lenkung kann aber auch als eine Drehschemel- oder Deichsellenkung ausgebildet sein, die über einen oder mehrere Hydraulikzylinder und/oder elektrische Stellmotoren betätigt wird. In diesem Fall werden das erste und zweite Rad gemeinsam durch einen Aktor in ihrem Lenkeinschlag verstellt. Der Aktor wird von der Recheneinheit angesteuert.

Nach einer Ausgestaltung der Erfindung werden mehrere zeitlich nacheinander ermittelte Werte für den aktuellen Kurvenradius des Anhängers in einem elektronischen Speicher gespeichert und von der Recheneinheit miteinander verglichen. Durch den Vergleich der gespeicherten Werte ist erkennbar, in welche Richtung der Anhänger um seine Hochachse dreht. Wird der Kurvenradius im Vergleich der miteinander verglichenen Messwerte über die Zeit enger, lenkt der Anhänger noch weiter ein. Bleiben die miteinander verglichenen Messwerte über die Zeit gleich, behält der Anhänger seinen Kurvenradius bei. Wird der Kurvenradius der miteinander verglichenen Messwerte über die Zeit größer, lenkt der Anhänger aus. Die so ermittelte Dynamik der Kurvenfahrt kann dazu genutzt werden, die aktuelle Bewegungsrichtung mit einer Plan-Bewegungsrichtung abzugleichen. Ergeben sich bei diesem Vergleich Differenzen, kann mit der Anhängerlenkung aktiv gegengesteuert werden, um die aktuelle Bewegungsrichtung an die Plan-Bewegungsrichtung anzupassen.

Nach einer Ausgestaltung der Erfindung werden als Sensoren aktive oder passive Raddrehzahlsensoren verwendet. Derartige Raddrehzahlsensoren finden im Fahrzeugbau beispielsweise in ABS- und Fahrdynamik-Regelsystemen eine millionenfache Anwendung. Diese Raddrehzahlsensoren sind kostengünstig verfügbar, zuverlässig, leicht, robust und beanspruchen wenig Bauraum. Wird ein Sensor erst durch das Anlegen einer Versorgungsspannung "aktiviert" und generiert dann ein Ausgangssignal, wird dieser Sensor als "aktiv" bezeichnet. Arbeitet ein Sensor ohne eine zusätzliche Versorgungsspannung, wird dieser Sensor als "passiv" bezeichnet.

Die passiven Raddrehzahlsensoren sind beispielsweise direkt über einem Impulsrad angebracht, das mit der Radnabe verbunden ist. Der Polstift, der von einer Wicklung umgeben ist, ist mit einem Dauermagneten verbunden, dessen Magnetwirkung bis an das Polrad hineinreicht. Die Drehbewegung des Impulsrades und der damit verbundene Wechsel von Zahn und Zahnlücke bewirkt eine Änderung des magnetischen Flusses durch den Polstift und die Wicklung. Dieses sich ändernde Magnetfeld induziert in der Wicklung eine messbare Wechselspannung. Die Frequenz und Amplituden dieser Wechselspannung stehen im Verhältnis zur Raddrehzahl. Induktive passive Sensoren benötigen keine separate Spannungsversorgung durch die Recheneinheit. Da der Signalbereich für die Signalerkennung von der Recheneinheit definiert wird, muss sich die Amplitudenhöhe innerhalb eines Spannungsbereiches bewegen. Der Abstand zwischen Sensor und Impulsrad wird durch die Achskonstruktion vorgegeben.

Der Aktivsensor ist beispielsweise ein Näherungssensor mit integrierter Elektronik, der mit einer von der Recheneinheit definierten Spannung versorgt wird. Als Impulsrad kann zum Beispiel ein Multipolring verwendet werden, der gleichzeitig in einem Dichtring eines Radlagers eingesetzt sein kann. In diesem Dichtring sind Magnete mit wechselnder Polrichtung eingesetzt. Die in der elektronischen Schaltung des Sensors integrierten magnetoresistiven Widerstände erkennen bei der Drehung des Multipolringes ein wechselndes Magnetfeld. Dieses Sinussignal wird von der Elektronik im Sensor in ein digitales Signal umgewandelt. Die Übertragung zur Recheneinheit erfolgt als Stromsignal im Pulsweitenmodulationsverfahren. Der Sensor ist über ein zweipoliges elektrisches Anschlusskabel mit der Recheneinheit verbunden. Über die Spannungsversorgungsleitung wird gleichzeitig das Sensorsignal übermittelt. Die andere Leitung dient als Sensormasse. Neben magnetoresistiven Sensorelementen werden heute auch Hallsensorelemente verbaut, die größere Luftspalte zulassen und auf kleinste Änderungen im Magnetfeld reagieren. Wird in einem Anhänger statt einem Multipolring ein Stahl-Impulsrad eingebaut, wird auf dem Sensorelement zusätzlich ein Magnet aufgebracht. Dreht sich das Impulsrad, verändert sich das konstante Magnetfeld im Sensor. Die Signalverarbeitung und der IC sind identisch mit dem magnetoresitiven Sensor.

Aktivsensoren weisen gegenüber Passivsensoren eine Reihe von Vorteilen auf. Sie ermöglichen eine Drehzahlerfassung bereits aus dem Stillstand. Das ermöglicht bereits Messungen von Drehwinkelveränderungen an einem Rad bei Geschwindigkeiten ab 0,1 km/h. Die beispielsweise nach dem Hall-Prinzip arbeitenden Sensoren erkennen Vorwärts- und Rückwärtsbewegungen. Die Bauform des Sensors ist kleiner und leichter. Durch den Wegfall der Impulsräder entsteht eine Vereinfachung der Kraftübertragungsgelenke. Die Empfindlichkeit gegenüber elektromagnetischen Störungen ist geringer. Veränderungen des Luftspaltes zwischen Sensor und Magnetring haben keine direkten Auswirkungen auf das Signal. Die aktiven Sensoren sind schließlich auch unempfindlicher gegenüber Vibrationen und Temperaturschwankungen.

Erfindungsgemäß wird der Wert für den aktuellen Kurvenradius des Anhängers verrechnet zu einem Soll-Stellsignal an einen Aktor, der Bestandteil einer Vorrichtung zur Lenkung des Anhängers ist. Der mit günstigen, aber zuverlässigen Sensoren ermittelte Wert für den aktuell gefahrenen Kurvenradius bildet eine gute Datenbasis, um damit einen Anhänger zu lenken. Je nachdem, ob der Kurvenradius des Anhängers gleich bleiben, vergrößert oder verkleinert werden soll, um einem Zugfahrzeug in einer von diesem vorgegebenen Spur zu folgen oder neben der Fahrspur des Zugfahrzeugs zu fahren, können die Soll-Stellsignale an den Aktor, durch dessen Betätigung der Kurvenradius gleich bleibt oder verändert wird, auf der Basis der nach dem erfindungsgemäßen Verfahren ermittelten aktuellen Werte des Kurvenradiusses, auf dem sich der Anhänger aktuell bewegt, berechnet werden.

Dabei ist zu berücksichtigen, dass die Zugrichtung, mit der das Zugfahrzeug an der Deichsel des Anhängers zieht, einen unmittelbaren Einfluss auf die Fahrtrichtung ausübt, mit der sich der Anhänger fortbewegt. Ändert sich die Richtung, in die das Zugfahrzeug fährt, ändert sich automatisch auch die Zugrichtung, in die der Anhänger gezogen wird. Je nach Lenkstrategie, ob der Anhänger dabei weiterhin der Spur des Zugfahrzeugs folgen oder weiterhin neben der Spur des Zugfahrzeugs fahren soll, ergeben sich daraus Konsequenzen für das Soll-Stellsignal an den Aktor. Wenn der Kurvenradius bekannt ist, auf dem sich der Anhänger aktuell bewegt, ist es auf Basis weiterer geometrischer Daten - insbesondere des Abstandswertes vom Drehpunkt der Hinterachse des Zugfahrzeugs zum Kupplungspunkt am Zugfahrzeug zur Anhängung der Deichsel des Anhängers - möglich, auch den aktuellen Kurvenradius zu bestimmen, auf dem sich das Zugfahrzeug bewegt. Sind sowohl der aktuell gefahrene Kurvenradius des Zugfahrzeugs als auch der aktuell gefahrene Kurvenradius des Anhängers bekannt, ist es daraus möglich, ein passendes Soll-Stellsignal zur Ansteuerung des Aktors zur Betätigung der Lenkung des Anhängers zu bestimmen. Da die Recheneinheit kontinuierlich die an sie übermittelten Sensorwerte auswertet, den Kurvenradius des Anhängers berechnet und Soll-Stellsignale an den Aktor der Lenkeinrichtung des Anhängers ausgibt, handelt es sich dabei um ein dynamisches System, das die Soll-Stellsignale an den Aktor in einer hohen Taktrate fortlaufend an den errechneten Bedarf anpasst und die Einstellung der Lenkung auf diese Weise dem errechneten Bedarf nachführt.

Über die Generierung von Soll-Stellsignalen an einen Aktor kann sich ein von einem Zugfahrzeug gezogener Anhänger selbsttätig lenken, ohne dabei vom Zugfahrzeug unterstützt werden zu müssen. Es ist möglich, den Anhänger mit einem Lenksystem auszustatten, das den Anhänger auf einer gewünschten Fahrspur lenkt. Damit ist die Lenkung des Anhängers unabhängig vom jeweils vorgespannten Zugfahrzeug. Es können also beliebige Zugfahrzeuge vor den Anhänger gehängt werden, ohne dass sich dadurch die Lenkfähigkeit des Anhängers verändert. Der Anhänger ist dadurch sehr flexibel einsetzbar. Das ist auch dann besonders vorteilhaft, wenn im Anhänger ein Tractor Implement Management- System vorhanden ist. In dem Tractor Implement Management-System können Pläne für die Bearbeitung der jeweiligen landwirtschaftlichen Fläche abgelegt sein, die von dem Gespann abzuarbeiten sind. Bei den Plänen kann es sich beispielsweise um eine Fahrwegplanung handeln, nach der das jeweilige Feld bearbeitet wird. Auch Ausbringmengen können in den Plänen festgelegt sein. Um bei der laufenden Bearbeitung die Pläne genau einzuhalten, ist die autonome Lenkbarkeit des Anhängers von Vorteil. Es ist auch möglich, den lenkbaren Anhänger in Kombination mit einem Programm einzusetzen, bei dem die angehängte Maschine den Traktor steuert, wie beispielsweise die Vorfahrtgeschwindigkeit, die Fahrtrichtung, die Höhensteuerung von Stellzylindern der Traktorhydraulik, und dergleichen. So kann es für eine genaue Flächenabdeckung der bearbeiteten Fläche vorteilhaft sein, wenn der Anhänger den Traktor steuert, insbesondere, wenn die Arbeitswerkzeuge genau entlang der Seitenkante der vorher bearbeiteten Fläche entlang bewegt werden sollen.

Erfindungsgemäß weist die Vorrichtung zur Lenkung des Anhängers zumindest einen Lenkwinkelsensor auf, mit dem Werte für den jeweils aktuellen Einschlagwinkel der Lenkeinrichtung ermittelt werden, der Recheneinheit werden die ermittelten Werte des Lenkwinkelsensors übermittelt, die Recheneinheit vergleicht die Werte des Lenkwinkelsensors mit den Soll-Stellsignalen und generiert bei einer Differenz zwischen den Werten des Lenkwinkelsensors und dem Soll-Stellsignal einen Korrekturwert, um den das Soll-Stellsignal verändert wird. Die kurveninneren und kurvenäußeren Lenkwinkel können dabei unterschiedlich sein. In diesem Fall können gemessene Lenkwinkel der jeweiligen Räder über eine Mittelwert- oder eine Korrekturrechnung als repräsentativer Lenkwinkel berücksichtigt werden. Ebenso kann ein Stellmaß eines Aktors erfasst werden, welcher über eine mechanische oder hydraulische Übersetzung einen Lenkwinkel repräsentiert. Über den Lenkwinkelsensor kann von der Recheneinheit die jeweils aktuell eingestellte Lenkrichtung erkannt werden, in die die Lenkeinrichtung des Anhängers lenkt. In das Soll-Stellsignal an den Aktor kann dann die aktuelle Lenkstellung der Lenkeinrichtung eingerechnet werden, wodurch Lenkbewegungen geglättet und ein insgesamt ruhigeres Lenkverhalten erreicht wird.

Nach einer Ausgestaltung der Erfindung bestimmt die Recheneinheit bei einer Kurvenfahrt neben dem Kurvenradius des Anhängers aus weiteren geometrischen Daten des Gespanns auch den Kurvenradius des Zugfahrzeugs und berechnet die Soll-Stellsignale an den Aktor der Vorrichtung zur Lenkung des Anhängers so, dass sich der Kurvenradius des Anhängers dem Kurvenradius des Zugfahrzeugs angleicht.

Wenn sich das Zugfahrzeug und der Anhänger mit gleichen Kurvenradien bewegen, läuft der Anhänger zwangsläufig in der Spur des Zugfahrzeugs. Als weitere geometrische Daten des Gespanns kommen der Abstand vom Drehpunkt der Hinterachse zum Kupplungspunkt am Zugfahrzeug und/oder der Abstand vom Kupplungspunkt am Zugfahrzeug zum Drehpunkt des Anhängers und/oder der Abstand des Drehpunktes des Anhängers zum Drehpunkt des Zugfahrzeugs in Betracht. Die geometrischen Daten des jeweils verwendeten Zugfahrzeugs können in der Recheneinheit des Anhängers in einer Tabelle hinterlegt sein, oder es ist eine manuelle Eingabemöglichkeit für die Eingabe der geometrischen Daten des Zugfahrzeugs in die Software der Recheneinheit vorgegeben.

Nach einer Ausgestaltung der Erfindung bestimmt die Recheneinheit bei einer Kurvenfahrt neben dem Kurvenradius des Anhängers aus weiteren geometrischen Daten des Gespanns auch den Kurvenradius von Arbeitswerkzeugen am Anhänger und berechnet die Soll-Stellsignale an den Aktor der Vorrichtung zur Lenkung des Anhängers so, dass sich der Kurvenradius der Arbeitswerkzeuge dem Kurvenradius des Zugfahrzeugs angleicht. Je nach Funktion des Anhängers kann es wünschenswert sein, den Anhänger nicht mit seinen Rädern, sondern mit den Arbeitswerkzeugen der Spur des Zugfahrzeugs folgend zu steuern. Eine solche Steuerung kann vorteilhaft sein, wenn die Arbeitswerkzeuge beispielsweise eine Bodenbearbeitung, eine Aussaat, eine Düngung vornehmen oder Pflanzenschutzmittel ausbringen. Wenn der Anhänger bei solchen Arbeiten mit den Rädern der Spur des Zugfahrzeugs folgend gesteuert ist, können sich zwischen nebeneinanderliegenden Bearbeitungsspuren insbesondere bei einer Kurvenfahrt Streifen auf dem Feld ergeben, die unbearbeitet geblieben sind. Hier wirkt sich aus, dass je nach Funktion des Anhängers zwischen der Achse des Fahrwerks und einem Anbaugerät ein erheblicher Abstand bestehen kann, durch den sich bei einer Kurvenfahrt ein seitlicher Versatz zwischen der Spur des Zugfahrzeugs und den Arbeitswerkzeugen ergibt. Das kann insbesondere auf Bestellkombinationen zutreffen, bei der mehrere Funktionsbaugruppen zu einem von einem Zugfahrzeug gezogenen Anhänger kombiniert worden sind, um bei einem Arbeitsgang mehrere Teilbearbeitungen gleichzeitig vorzunehmen. Ein Beispiel einer Bestellkombination kann eine kombinierte Egge, Aussaatvorrichtung und eine Düngevorrichtung sein. Hier können sich beträchtliche Längen des Anhängers ergeben. Hier muss eine sinnvolle Auswahl getroffen werden, welche Arbeitswerkzeuge der Bestellkombination maßgeblich sind für die Spurführung des Anhängers durch die Recheneinheit.

Nach einer Ausgestaltung der Erfindung werden die Sensorwerte oder der Wert für den aktuellen Kurvenradius des Anhängers verrechnet zu einem Soll-Stellsignal an einen Aktor, der Bestandteil einer Vorrichtung zur Tilgung von Schwingungen des Anhängers oder von Bauteilen des Anhängers ist. Ein Aktor kann in dieser Ausgestaltung der Erfindung auch ein Element mit adaptiv einstellbarer Feder- und/oder Dämpferrate sein.

Schwingungsbewegungen von Anhängern und/oder deren Bauteile während der Bearbeitung von landwirtschaftlichen Flächen sind unerwünscht. Die Schwingungen belasten die Bauteile, können sich aufschaukeln und verstärken, und sie erschweren eine präzise Ausführung der mit dem Anhänger auszuführenden Arbeit. Die Sensorwerte zu den aktuellen Raddrehzahlen oder der Wert für den aktuellen Kurvenradius des Anhängers können dazu genutzt werden, die Wank- und Gierbewegungen des Anhängers und/oder Teile seines Aufbaus wie beispielsweise das Verteilgestänge einer Feldspritze zu erfassen und eventuell auch vorherzusagen. Aus den Sensorwerten für die Drehzahl der ersten und zweiten Räder und dem Kurvenradius des Anhängers lassen sich Rotations- und Querbeschleunigungskräfte errechnen, die auf den Anhänger und dessen Bauteile einwirken. Über einen entsprechenden Regelalgorithmus können die Sensorwerte und/oder der Wert des aktuellen Kurvenradiusses in einen Stellbefehl an den Aktor weiterverrechnet werden. Vorteilhaft werden dabei aktuelle Sensorwerte mit vorherigen Sensorwerten verglichen, um dynamische Veränderungen in den Bewegungen des Anhängers zu erkennen. Die Schwingungsbewegungen des Anhängers und/oder seiner Bauteile können durch Stellbefehle an den Aktor verringert oder sogar vollständig getilgt werden.

Nach einer Ausgestaltung der Erfindung ist eine Konfigurationsmöglichkeit vorgesehen, um gespeicherte Daten für Abstände zwischen Drehpunkten abzuändern.

Durch die Änderungsmöglichkeit können gespeicherte Daten an geänderte Abstände, die sich beispielsweise ergeben können, wenn das Zugfahrzeug gegen ein anderes Zugfahrzeug ausgetauscht wird, angepasst werden. Der Anhänger ist dadurch mit verschiedenen Zugfahrzeugen betreibbar. Die einzige Anpassung, die vorgenommen werden muss, um auch bei wechselnden Zugfahrzeugen eine perfekte Spurnachführung zu ermöglichen, ist die Eingabe der veränderten Abstandsmaße.

Nach einer Ausgestaltung der Erfindung ist die Ausrichtung des Längsvektors des Zugfahrzeuges definiert als Funktion aus der Drehwinkel- und/oder Wegstreckendifferenz der Räder des Anhängers unter Zuhilfenahme der resultierenden Wegstrecke im gemessenen Zeitintervall als Mittelwert der Raddrehzahlen und dem Abstand der Achse des Anhängers zur Hinterachse oder zum Drehpunkt in der Mitte der Hinterachse des Zugfahrzeuges. Mit einer entsprechenden mathematischen Gleichung kann die Ausrichtung des Längsvektors des Zugfahrzeuges von der Recheneinheit bestimmt werden.

Nach einer Ausgestaltung der Erfindung ergibt sich der Kurvenradius des Zugfahrzeuges um seinen zentralen Drehpunkt als Funktion aus der Ausrichtung des Längsvektors des Zugfahrzeuges, dem Abstand der Anhängerkupplung zum Drehpunkt der Hinterachse und dem Kurvenradius des Anhängers. Mit einer entsprechenden mathematischen Gleichung kann die Ausrichtung der Kurvenradius des Zugfahrzeuges von der Recheneinheit bestimmt werden.

Weitere Merkmale der Erfindung ergeben sich aus den Ansprüchen, den Figuren und der gegenständlichen Beschreibung.

Die Erfindung wird nun anhand eines bevorzugten Ausführungsbeispiels sowie unter Bezugnahme auf die beigefügten Zeichnungen näher erläutert.

Es zeigen:

Fig. 1:     eine Prinzipskizze eines Anhängers mit Zugfahrzeug,

Fig. 2:     eine Prinzipskizze der Datenverarbeitung in der Recheneinheit,

Fig. 3:     eine Prinzipskizze der geometrischen Verhältnisse, die den Kurvenradius eines gezogenen Anhängers beeinflussen,

Fig. 4:     eine Prinzipskizze eines aus Zugfahrzeug und Anhänger mit Arbeitswerkzeugen bestehenden Gespanns bei einer Kurvenfahrt, und

Fig. 5a, 5b:     die Drehwinkel der Räder, die sich bei Kurvenfahrt unterscheiden.

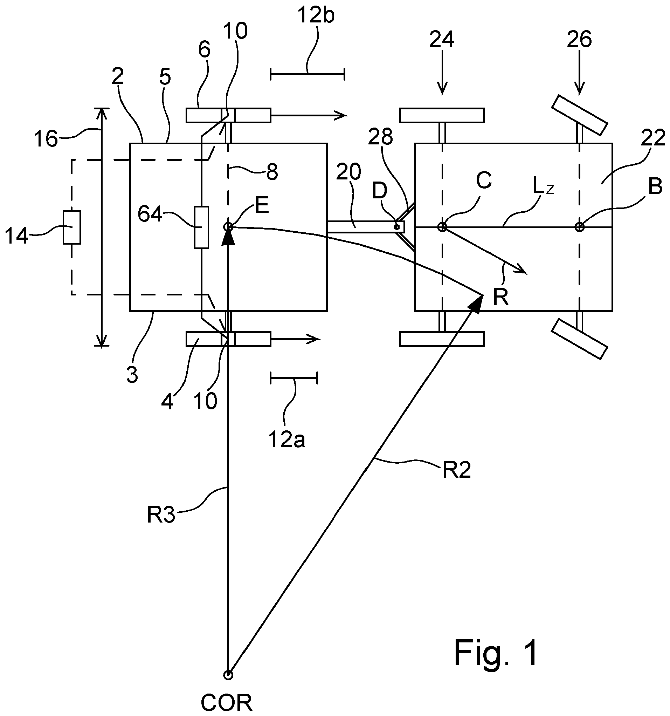

In Fig. 1 ist ein Anhänger 2 in einer Prinzipskizze dargestellt, der an ein Zugfahrzeug 22 angehängt ist. Auf der ersten Seite 3 des Anhängers 2 befindet sich das rechte Rad 4, auf der linken Seite in Fahrtrichtung gesehen als zweite Seite 5 befindet sich das linke Rad 6. Beide Räder können einzeln aufgehängt sein, sie können aber auch über eine gemeinsame Achse 8 miteinander verbunden sein. In den Radnaben der Räder 4, 6 befinden sich Sensoren 10, mit denen in einem Zeitintervall zurückgelegte Drehwinkel 34 als Werte $\omega_r$ und $\omega_l$ und/oder Wegstrecken 12 als Werte $v_l$ und $v_r$ gemessen werden können, die als Werte in den oben angegebenen Formeln verrechnet werden. Die auf diese Weise erzeugten Sensorwerte werden über ein Verbindungskabel oder auch per Funk an eine Recheneinheit 14 übertragen, die bevorzugt auf dem Anhänger 2 angeordnet ist. In der Recheneinheit 14 ist eine geeignete Software installiert, die die Sensorwerte verrechnet. Die in der Recheneinheit 14 gespeicherte Software verfügt über eine Information zur Spurweite 16 des Anhängers. Aus der Verrechnung der Sensorwerte von den Sensoren 10 mit der Spurweite 16 des Anhängers 2, die in den vorstehend angegebenen Formeln mit dem Wert d berücksichtigt wird, kann der Kurvenradius R3 errechnet werden, um den der Anhänger 2 aktuell um einen Drehpunkt COR dreht.

Der Anhänger 2 ist über eine Deichsel 20 mit dem Zugfahrzeug 22 verbunden. Das Zugfahrzeug 22 verfügt über eine Hinterachse 24 sowie eine Vorderachse 26. In dem Ausführungsbeispiel in Fig. 1 sind die Räder der Vorderachse 26 nach rechts eingeschlagen. Bei einer Vorfahrt des Zugfahrzeugs 22 in die mit dem Pfeil angedeutete Vorfahrtrichtung R wird auch der Anhänger 2 an der Deichsel nach rechts gezogen. Dabei ergeben sich für die Räder 4, 6 unterschiedliche Wegstrecken 12 beziehungsweise Drehwinkel 34, die diese zurücklegen. Während das rechte Rad 4 in einer Rechtskurve eine kürzere Wegstrecke 12a zurücklegt, rollt das linke Rad 6 bei einer solchen Kurvenfahrt über die längere Wegstrecke 12b. Durch einen Vergleich der beiden Wegstrecken 12 durch Bildung einer Differenz oder eines Quotienten kann nach den oben angegebenen Formeln der Winkel bestimmt werden, um den die aktuelle Vorfahrtrichtung des Anhängers 2 von einer Geradeausfahrt abweicht. Wenn der Rechenwert aus dem Vergleich der Sensorwerte noch mit der Spurweite 16 verrechnet wird, kann ein genaues Maß für den Kurvenradius R3 angegeben werden. Die Räder 4, 6 sind in neutraler Lenkposition dargestellt, können aber durch einen Aktor 64 nach rechts oder links gelenkt werden.

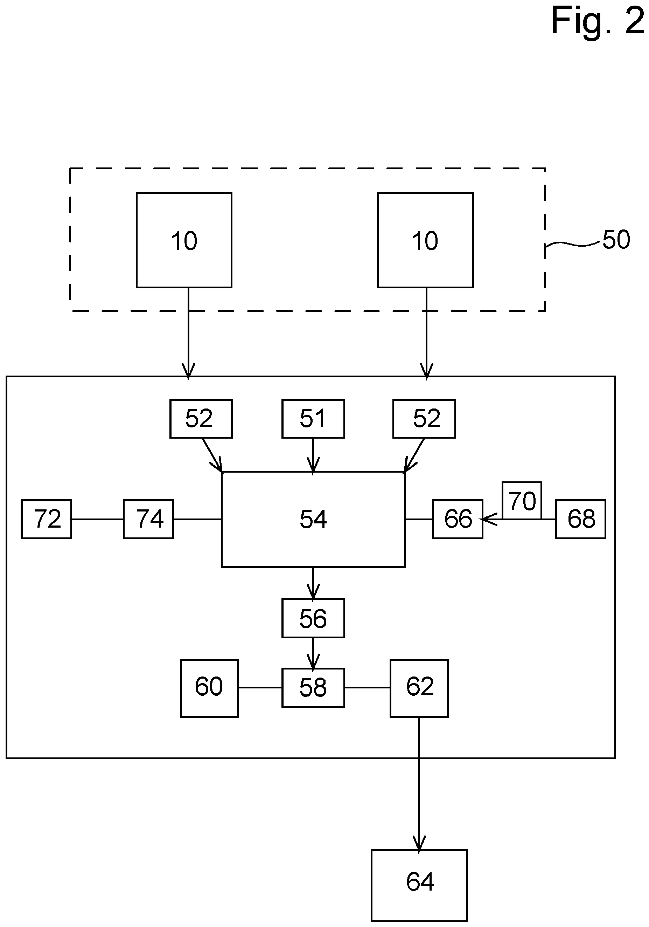

In Fig. 2 ist eine Prinzipskizze der Datenverarbeitung in der Recheneinheit gezeigt. Im Ausführungsbeispiel besteht die Messsensorik 50 aus den beiden Sensoren 10, die am rechten bzw. linken Rad 4, 6 angebracht sind. Die Sensoren 10 übermitteln Sensordaten 52, die Sensorwerte beinhalten, die einen Drehwinkel (34) und/oder eine Wegstrecke repräsentieren, an die Recheneinheit 14. Auf der Recheneinheit 14 ist ein Softwareprogramm 54 vorhanden, das auch seinen Zugriff auf einen Wert 51 für die Spurweite des Anhängers 2 hat. Das Softwareprogramm 54 ermittelt aus dem Vergleich der Sensorwerte aus den Sensordaten 52 einen Rechenwert 56, durch den Unterschiede in den Drehwinkeln 34 bzw. den Wegstrecken 12 zwischen dem linken und rechten Rad 4, 6 erkennbar sind. Der Rechenwert 56 wird vom Softwareprogramm 54 mit dem Wert 51 für die Spurweite des Anhängers 2 weiter verrechnet, um daraus den Wert 58 für den Kurvenradius R3 zu bilden. Der Wert 58 kann in einem Speicher 60 abgelegt werden. Das Softwareprogramm 54 kann aber auch so programmiert sein, dass es aus dem Wert 58 noch ein Soll-Stellsignal 62 errechnet, das an einen Aktor 64 weitergeleitet wird, der ein Bestandteil einer Lenkung des Anhängers 2 ist, wie bereits in Figur 1 beschrieben. Der Anhänger 2 kann beliebig über eine Deichsellenkung, Achsschenkellenkung, Drehung der Achse 8 um eine Drehachse oder auf sonstige Weise über einen Aktor 64 gelenkt werden.

Die Recheneinheit 14 ist über eine Schnittstelle 66 mit einem externen Gerät 68 verbunden, das ein Wegsignal 70 erzeugt und dieses an die Recheneinheit 14 übermittelt, die Recheneinheit 14 vergleicht das übermittelte Wegsignal 70 mit einem errechneten Wert, der aus den Sensorwerten für den in einem Zeitintervall zurückgelegten Drehwinkel 34 und/oder die Wegstrecke 12 ermittelt worden ist, und generiert bei einer Differenz zwischen dem Wegsignal 70 und dem aus den Sensorwerten errechneten Wert ein Korrektursignal, mit dem die Sensordaten und/oder der Rechenwert verrechnet werden.

Die Recheneinheit 14 kann außerdem über eine Schnittstelle 74 mit einem Lenkwinkelsensor 72 verbunden sein, mit dem ein jeweils aktueller Einschlagwinkel der Lenkeinrichtung oder ein Deichselwinkel gemessen wird, um den die Deichsel 20 des Anhängers 2 im Verhältnis zur Mittellängsachse des Zugfahrzeugs 22 angestellt ist. Das Signal des Lenkwinkelsensors 72 kann in den Rechenschritten von der auf der Recheneinheit 14 installierten Software weiterverarbeitet werden.

Wird der Anhänger 2 in einer Kurve gezogen, so ist die vom Rad an der Kurveninnenseite durchfahrene Strecke kürzer als die vom Rad an der Kurvenaußenseite durchfahrene Strecke. Im erfindungsgemäßen Verfahren ergibt sich aus der Differenz der Wegstrecken 12a, 12b beider Räder 4, 6 und der Spurweite 16 der momentane Kurvenradius R3 des Anhängers 2. Das heißt, der Kurvenradius R3 des Anhängers 2 ist eine Funktion der Drehwinkeldifferenz der sich an beiden Anhängerseiten gegenüberliegenden Räder 4, 6 und der Spurweite 16.

Die grundlegende Differenz zwischen den Drehwinkeln 34 der am Anhänger 2 befindlichen Räder 4, 6 wird permanent in kurzen Zeitabständen und mit hoher Auflösung gemessen, um den momentanen Kurvenradius R3 hochfrequent ermitteln zu können. Sofern die Auflösung in bestimmten Einsatzfällen zu ungenau ist, kann mittels einer sensorischen Einrichtung die Rate der Drehung des Anhängers entlang des zu bestimmenden Kurvenradiusses erfasst werden und zu Plausibilitätsprüfung und als Korrekturgröße zur genaueren Berechnung des Kurvenradiusses herangezogen werden. Die Messungen werden in einer Recheneinheit 14, die eine Auswerteelektronik mit einem Softwareprogramm 54 aufweist, elektronisch ausgewertet und mit Hilfe der Anhängergeometrie in einen Wert 58 für den Kurvenradius R3 umgewandelt. Dabei wird ggf. der Abstand L2 vom Drehpunkt C der Hinterachse 24 zum Kupplungspunkt D am Zugfahrzeug 22 als Korrekturwert zusätzlich in der Auswerteelektronik eingestellt, um die Genauigkeit zu verbessern. Bei einem Zugfahrzeug 22 wie einem Traktor mit großen Rädern und Anhängekupplung nahezu direkt an der Hinterachse kann dies aber auch vernachlässigt werden.

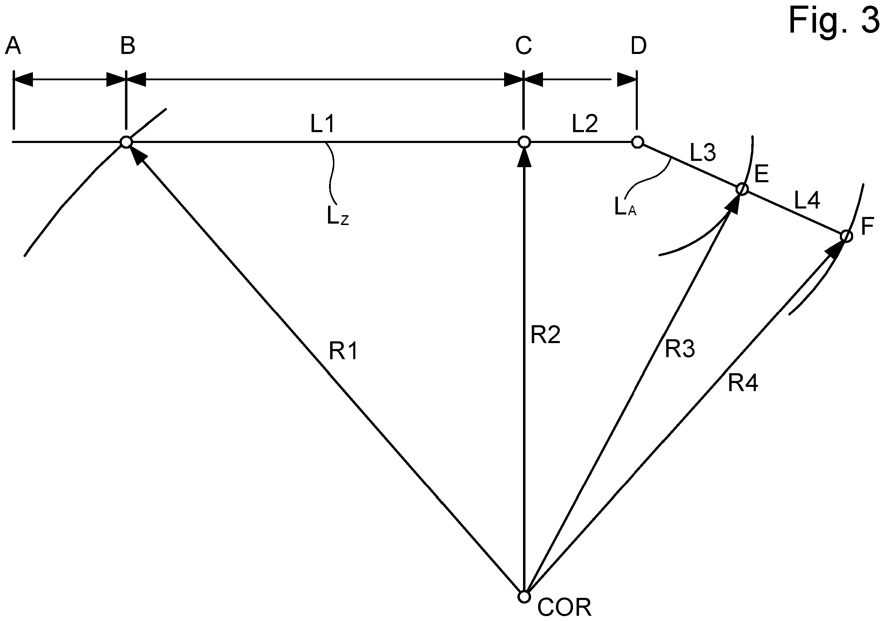

Fig. 3 zeigt die geometrischen Verhältnisse des Fahrzeuggespanns, die die Kurvenfahrt eines Anhängers 2 beeinflussen.

Zwischen der Anhängekupplung 28 am Zugfahrzeug 22 und den sich an beiden Fahrzeugseiten 3, 5 gegenüberliegenden Radaufhängungen der Räder 4, 6 des Anhängers 2 besteht eine stabile und definierte Geometrie bzw. Kinematik. Die Linie A-D bezeichnet die Längsachse des Zugfahrzeugs 22. Der Abstand A-B kennzeichnet den Abstand zwischen der Front des Zugfahrzeugs und der Mitte der Vorderachse. Das Zugfahrzeug 22 hat die relevanten Punkte Mitte Frontachse - oder den Drehpunkt bei mehreren gelenkten Vorderachsen - als Punkt B, Mitte Hinterachse zwischen den gegenüberliegenden Rädern bei einer einzelnen Hinterachse - oder den Drehpunkt der Hinterachskombination bei mehreren Hinterachsen - als Punkt C und den Drehpunkt D in der Anhängekupplung 28, in dem die Deichsel des Anhängers 2 an das Zugfahrzeug 22 angehängt ist und um den das Zugmaul der Deichsel 20 um den Anhängezapfen der Anhängekupplung 28 dreht. Die Mitte der Achse 8 des Anhängers 2 stellt in dem in Fig. 3 gezeigten Ausführungsbeispiel den Drehpunkt E des Anhängers 2 dar. Am Anhänger 2 befindet sich noch ein Arbeitswerkzeug 32, dessen Position entlang der Längsachse des Anhängers 2 durch den Punkt F bezeichnet ist. Mit L1 ist der Abstand zwischen dem Drehpunkt der Vorderachse B und dem Drehpunkt der Hinterachse C bezeichnet. Da die Anhängekupplung 28 normalerweise hinter der Hinterachse 24 montiert ist, bezeichnet L2 den Abstand des Hinterachsdrehpunktes C zur Anhängekupplung D. Der Anhänger 2 weist die mit L3 bezeichnete Länge des Abstands vom Drehpunkt D in der Anhängekupplung 28 des Zugfahrzeugs 22 zum Drehpunkt E der Anhängerachse 8 auf. L4 bezeichnet den Abstand des am Anhänger 2 angeordneten Arbeitswerkzeugs 32 von der Anhängerachse 8 mit dem Drehpunkt E. Aus der Ansicht in Fig. 3 ist erkennbar, dass der Kurvenradius R3 um den zentralen Drehpunkt COR, mit dem die Anhängerachse 8 im Ausführungsbeispiel bewegt wird, kleiner ist als der Kurvenradius R4, dem das Arbeitswerkzeug 32 in seinem Punkt F folgt. Daraus folgt, dass bei der in Fig. 3 gezeigten Kurvenbahn des Anhängers 2 die Achse 8 des Anhängers 2 in etwa der Spur der Hinterachse des Zugfahrzeugs 22 folgt, weil der Kurvenradius R2 etwa gleich ist zum Kurvenradius R3. Das Arbeitswerkzeug 32 würde der Hinterachse des Zugfahrzeugs 22 aber mit einem leichten Versatz zur Kurvenaußenseite hin folgen, weil der Kurvenradius R4 größer ist als der Kurvenradius R2.

Soll die Spur des Anhängers 2 genau der Spur des Zugfahrzeuges 22 folgen, so muss die Kurvenfahrt des Zugfahrzeuges 22 mathematisch nachvollzogen werden, damit der Anhänger 2 aktiv entsprechend gelenkt werden kann. Das Verfahren zur Bestimmung der aktiven Lenkrichtung für den Anhänger 2 basiert auf der Tatsache, dass sich eine Kurvenfahrt des Zugfahrzeuges 22 über die Anhängekupplung 28 auf den Anstellwinkel (Deichselwinkel) zwischen Zugfahrzeug 22 und Anhänger 2 auswirkt.

Der Kurvenradius des Zugfahrzeuges 22 ergibt sich aus der räumlich-geometrischen Orientierung des Zugfahrzeuges 22 zum Anhänger 2. Diese ist gekennzeichnet durch die Längsachse Lz des Zugfahrzeuges 22 entlang der Linie A-D in Fig. 3 und den Winkel zur Längsachse $L_A$ des Anhängers 2 entlang der Linie D-E in Fig. 3. Die Längsachse Lz entspricht in ihrer räumlichen Lage dem Längsvektor, in dessen Richtung sich das Zugfahrzeug 22 in einem Betrachtungszeitpunkt bewegt.

Die relative räumliche Lage der Längsachse Lz des Zugfahrzeuges 22 zur Längsachse $L_A$ des Anhängers 2 ergibt sich als Funktion aus der Drehwinkel- und/oder Wegstreckendifferenz der Räder 4, 6 des Anhängers 2 unter Zuhilfenahme der resultierenden Wegstrecke 12 im gemessenen Zeitintervall als Mittelwert der Drehwinkel 34 und/oder Wegstrecken 12 und dem Abstand der Achse des Anhängers 2 zur Hinterachse oder zum Drehpunkt C in der Mitte der Hinterachse 24 des Zugfahrzeuges 22.

Der Kurvenradius des Zugfahrzeuges 22 um seinen zentralen Drehpunkt ergibt sich als Funktion aus der Längsachse Lz des Zugfahrzeuges 22, der Länge L2 als Abstand zwischen dem Drehpunkt D der Anhängerkupplung 28 und dem Drehpunkt C der Hinterachse 24 und dem Kurvenradius R3 des Anhängers 2.

Der Kurvenradius R2 der Hinterachse 24 und der Kurvenradius R1 der Vorderachse 26 des Zugfahrzeuges 22 ergeben sich als Funktion aus dem vorstehend beschriebenen Kurvenradius des Zugfahrzeugs 22 unter Einbeziehung der statischen Abstände L1 und L2.

In der Praxis in beispielsweise agrartechnischen Anwendungen wird als Referenzspur vorzugsweise die Spur der Hinterachse 24 des Traktors als Zugfahrzeug 22 - also eine Bewegungsbahn entlang eines Kurvenradiusses R2 um den zentralen Drehpunkt in Fig. 3 - gewählt. Das Verfahren funktioniert auch mit Zugfahrzeugen 22 mit Allradlenkung, bei denen R1 und R2 in Fig. 3 identisch sind.

Die Auswerteelektronik in der Recheneinheit 14 ermittelt aus den Sensorwerten der Sensoren 10 beider Seiten 3, 5 die resultierende Wegstrecke 12 im gemessenen Zeitintervall des Gespanns. Sie steuert daraufhin den Aktor 64 der Lenkung des Anhängers 2 mit einem Soll-Stellsignal 62 dergestalt an, dass diese nach Durchfahren einer Strecke, welche der Distanz zwischen der Hinterachse 24 des Zugfahrzeuges 22 und der Achse 8 oder Achsmitte E bei mehreren Achsen am Anhänger 2 entspricht, genau den Kurvenradius lenkt, welcher genau an der Stelle der Fahrtstrecke gemessen wurde, an dem die Räder des Zugfahrzeuges 22 diesen Punkt passiert haben. Damit fährt der Anhänger 2 korrekt in der Spur des Zugfahrzeuges 22. Dafür werden vorzugsweise vorausschauende Algorithmen wie Kalman-Filter oder Extended Kalman-Filter eingesetzt.

Bei diesem Verfahren braucht die Achse 8 des Anhängers 2, die Räder 4, 6 oder die Deichsel 20 nicht starr zu sein. Sie können auch aktiv gelenkt werden, wenn der Anhänger 2 spurtreu zum Zugfahrzeug 22 nachlaufen soll. Dies gilt in gleichem Maß für alle oder einen Teil der Achsen 8, wenn der Anhänger 2 mehrere Achsen 8 aufweist.

Das erfindungsgemäße Verfahren kann natürlicherweise nicht nur für ein Gespann als eine Kombination aus einem Zugfahrzeug 22 und einem einzigen Anhänger 2 angewendet werden, sondern ebenfalls für die Lenkung mehrerer Achsen 8 an einem Mehrachsanhänger 2 sowie auch als Folgesteuerung mehrerer Anhänger 2 oder selbständiger Fahrzeuge hintereinander.

Dabei braucht die Kopplung der Fahrzeuge nicht mechanisch starr sein, sondern kann auch als Puffer mit Auszugsmessung ausgeführt sein. Alternativ können die Fahrzeuge auch frei hintereinander herfahren ("Platooning"), wobei eine Abstandsmessung zwischen den Fahrzeugen existieren sollte. Diese kann auch indirekt über Radionavigation oder z.B. GNSS-Systeme erfolgen.

Ebenso können weitere Werte wie z.B. die genaue schlupffreie Gespanngeschwindigkeit als Korrekturwerte in die Berechnung eingehen. Diese können beispielsweise per elektronischem Bussystem vom Zugfahrzeug 22 bereitgestellt werden.

Das System zur Umsetzung des oben beschriebenen Verfahrens verwendet die Sensoren 10 an den Rädern 4,6, welche beispielsweise auch als Odometer, Tachometer oder Encoder ausgeführt sein können. Gegebenenfalls können zusätzliche, optionale Sensoren vorhanden sein. Weiter ist eine Auswerte- und Steuerelektronik vorhanden, die vorzugsweise auf dem Anhänger 2 installiert wird, gegebenenfalls zusammen mit weiteren für die Spurführung notwendigen Sensoren oder Ansteuerelektroniken für die Lenkung. Sie kann aber auch in einem für den Anhänger 2 oder das angehängte Gerät ohnehin vorhandenen Elektronikgerät auf dem Zugfahrzeug 22 angeordnet sein.

Das Verfahren kann eine Konfigurationsmöglichkeit zum Einstellen von L1 und L2 vorsehen, z. B. über ein Display an der Auswerte- oder Steuerelektronik des Anhängers 2 oder über eine elektronische Datenleitung zum Zugfahrzeug 22 oder über einen einfachen analogen Einstellregler wie ein Potentiometer an der Elektronik.

Nach dem Verfahren können auch die Aktoren der anhängerseitig vorgesehenen Lenkung angesteuert werden, um den Anhänger zu lenken. Das kann beispielsweise über eine Pulsweitenmodulation von Signalen oder über Schwarz-Weiß- als auch Analogsignale erfolgen, welche beispielsweise hydraulische oder pneumatische Elektromagnetventile oder elektrische Stellmotoren ansteuern. Auch eine Ansteuerung über Bus-Signale, wie beispielsweise über einen CAN-Bus, ist vorgesehen.

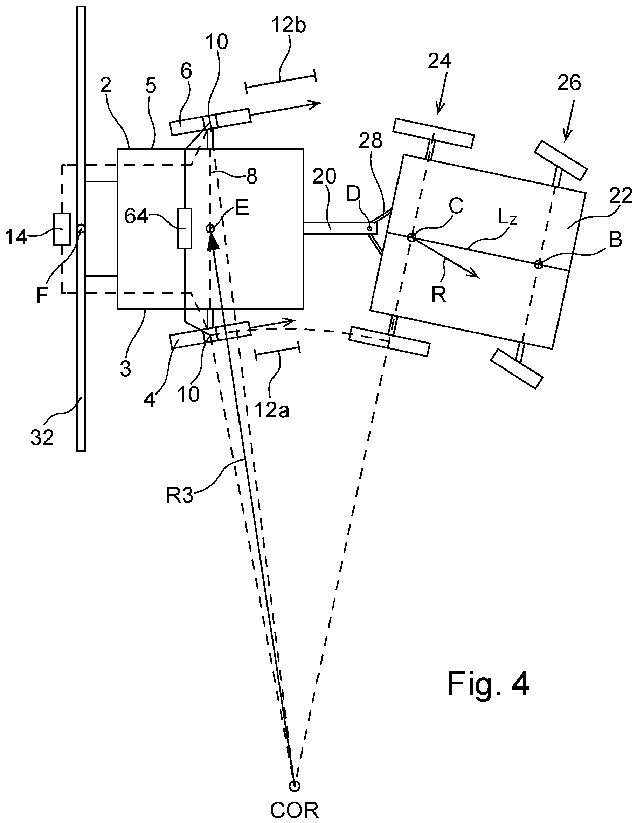

In Fig. 4 ist ein Ausführungsbeispiel gezeigt, bei dem die Räder 4, 6 von dem Aktor 64, welcher durch die Recheneinheit 14 angesteuert wird, zur Lenkung des Anhängers 2 in einem Lenkwinkel zur Längsachse des Anhängers 2 eingeschlagen sind, bei dem sich gleiche Längen der Kurvenradien R2, R3 zu den Drehpunkten C bzw. E im Verhältnis zum zentralen Drehpunkt COR ergeben. Der spurtreue Nachlauf der Räder 4, 6 zu den Rädern der Hinterachse 24 des Zugfahrzeugs 22 ist durch die gestrichelten Kurven angedeutet. In Fig. 4 ist als Beispiel für ein Arbeitsgerät 32 noch ein Spritzbaum angedeutet, der seinen Mittelpunkt F auf der Längsmittelachse des Anhängers entlang der Linie D-E-F hat.

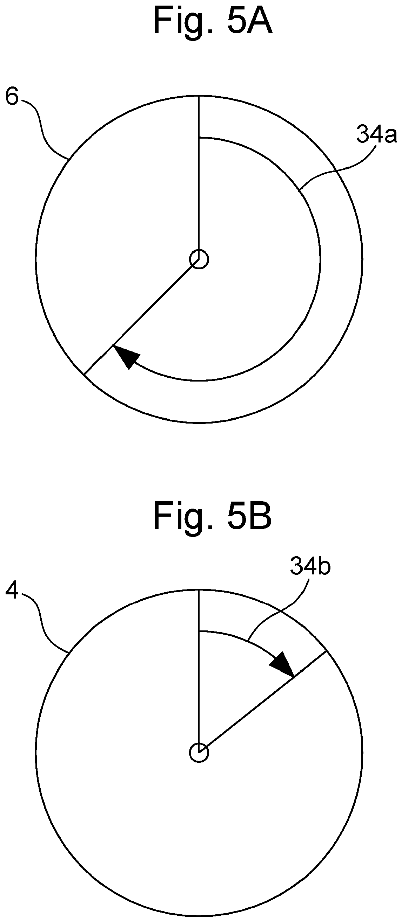

In den Fig. 5a, 5b sind die Drehwinkel 34 der Räder 4, 6 gezeigt, die sich bei Kurvenfahrt in einem Zeitintervall, in dem die Drehwinkel gemessen werden, unterscheiden. Die in einem Zeitintervall von den Sensoren gemessenen Drehwinkel 34a, 34b werden als Werte $\omega_r$ und $\omega_l$ gemäß der vorstehend angegebenen Formel verrechnet. Während in der Fig. 5a der größere Drehwinkel 34a des kurvenäußeren Rades 6 aus der Fig. 4 gezeigt ist, zeigt die Fig. 5b den kleineren Drehwinkel 34b des kurveninneren Rades 4. Durch die in einem Zeitintervall gemessenen unterschiedlichen Drehwinkel 34a, 34b ergeben sich die unterschiedlich langen Wegstrecken 12a, 12b, die in Fig. 4 eingezeichnet sind.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

**Patentansprüche**

1. Verfahren zur Ermittlung eines Kurvenradiusses (R3) eines an ein Zugfahrzeug (22) angehängten und von diesem bewegten Anhängers (2) mit einer Recheneinheit (14), die mit einer Messsensorik (50) verbunden ist, die Sensordaten (52) über aktuelle Bewegungen des Anhängers (2) an die Recheneinheit (14) übermittelt und die von der Recheneinheit (14) bei der Ermittlung des Kurvenradiusses (R3) berücksichtigt werden, wobei die Messsensorik Sensoren (10) aufweist, mit denen in einem Zeitintervall zurückgelegte Drehwinkel (34) und/oder Wegstrecken (12) von auf gegenüberliegenden ersten und zweiten Seiten (3, 5) des Anhängers (2) befindlichen ersten und zweiten Rädern (4, 6) gemessen werden, der erste Sensorwert vom ersten Rad (4) auf der ersten Seite (3) des Anhängers (2) mit dem zweiten Sensorwert vom zweiten Rad (6) auf der zweiten Seite (5) des Anhängers (2) verrechnet wird, um einen Rechenwert (56) zu bilden, und der Rechenwert (56) von der Recheneinheit (14) unter Berücksichtigung eines Werts (51) für die Spurweite (16) der miteinander verglichenen ersten und zweiten Räder (4, 6) zu einem Wert (58) für den aktuellen Kurvenradius (R3) des Anhängers (2) verrechnet wird, **dadurch gekennzeichnet, dass** der Wert (58) für den aktuellen Kurvenradius (R3) des Anhängers (2) verrechnet wird zu einem Soll-Stellsignal (62) an einen Aktor (64), der Bestandteil einer Vorrichtung zur Lenkung des Anhängers (2) ist und die Vorrichtung zur Lenkung des Anhängers (2) einen Lenkwinkelsensor (72) aufweist, mit dem Werte für den jeweils aktuellen Einschlagwinkel der Lenkeinrichtung ermittelt werden, der Recheneinheit (14) die ermittelten Werte des Lenkwinkelsensors (72) übermittelt werden, die Recheneinheit (14) die Werte des Lenkwinkelsensors (72) mit den Soll-Stellsignalen (62) vergleicht und bei einer Differenz zwischen den Werten des Lenkwinkelsensors (72) und dem Soll-Stellsignal (62) einen Korrekturwert generiert, um den das Soll-Stellsignal (62) verändert wird.

2. Verfahren nach Anspruch 1, **dadurch gekennzeichnet, dass** die Recheneinheit (14) bei der Verrechnung die Bewegungsrichtung des Anhängers (2) und/oder der ersten und zweiten Räder (4, 6) berücksichtigt.

3. Verfahren nach Anspruch 1 oder 2, **dadurch gekennzeichnet, dass** das erste Rad (4) und das zweite Rad (6) einer gemeinsamen Achse (8) zugehörig sind.

4. Verfahren nach einem der vorhergehenden Ansprüche, **dadurch gekennzeichnet, dass** die Recheneinheit (14) einen Sensorwert für die Geschwindigkeit berücksichtigt, mit der der Anhänger (2) bewegt wird.

5. Verfahren nach einem der vorhergehenden Ansprüche, **dadurch gekennzeichnet, dass** die Recheneinheit (14) über eine Schnittstelle (66) mit einem externen Gerät (68) verbunden ist, das ein Wegsignal (70) erzeugt und dieses an die Recheneinheit (14) übermittelt, die Recheneinheit (14) das übermittelte Wegsignal (70) mit einem errechneten Wert vergleicht, der aus den Sensorwerten für den in einem Zeitintervall zurückgelegten Drehwinkel (34) und/oder die Wegstrecke (12) ermittelt worden ist, und bei einer Differenz zwischen dem Wegsignal (70) und dem aus den Sensorwerten errechneten Wert ein Korrektursignal generiert, mit dem die Sensordaten und/oder der Rechenwert verrechnet werden.

6. Verfahren nach einem der vorhergehenden Ansprüche, **dadurch gekennzeichnet, dass** die Recheneinheit (14) zur Ermittlung des Rechenwertes softwaregestützte probabilistische Filter verwendet.

7. Verfahren nach einem der vorhergehenden Ansprüche, **dadurch gekennzeichnet, dass** das erste und zweite Rad (4, 6) aktiv gelenkt sind.

8. Verfahren nach einem der vorhergehenden Ansprüche, **dadurch gekennzeichnet, dass** mehrere zeitlich nacheinander ermittelte Werte (58) für den aktuellen Kurvenradius (R3) des Anhängers (2) in einem elektronischen Speicher (60) gespeichert und von der Recheneinheit (14) miteinander verglichen werden.

9. Verfahren nach einem der vorhergehenden Ansprüche, **dadurch gekennzeichnet, dass** als Sensoren (10) aktive oder passive Raddrehzahlsensoren verwendet werden.

10. Verfahren nach Anspruch 1, **dadurch gekennzeichnet, dass** die Recheneinheit (14) bei einer Kurvenfahrt neben dem Kurvenradius (R3) des Anhängers (2) aus weiteren geometrischen Daten des Gespanns auch den Kurvenradius (R1, R2) des Zugfahrzeugs (22) bestimmt und die Soll-Stellsignale (62) an den Aktor der Vorrichtung zur Lenkung des Anhängers (2) so berechnet, dass sich der Kurvenradius (R1, R2) des Anhängers (2) dem Kurvenradius (R3) des Zugfahrzeugs (22) angleicht.

11. Verfahren nach einem der vorhergehenden Ansprüche, **dadurch gekennzeichnet, dass** die Recheneinheit (14) bei einer Kurvenfahrt neben dem Kurvenradius (R3) des Anhängers (2) aus weiteren geometrischen Daten des Gespanns auch den Kurvenradius (R4) von Arbeitswerkzeugen (32) am Anhänger (2) bestimmt und die Soll-Stellsignale (62) an den Aktor der Vorrichtung zur Lenkung des Anhängers (2) so berechnet, dass sich der Kurvenradius (R4) der Arbeitswerkzeuge (32) dem Kurvenradius (R1, R2) des Zugfahrzeugs (22) angleicht.

12. Verfahren nach einem der vorhergehenden Ansprüche, **dadurch gekennzeichnet, dass** die Sensorwerte oder der Wert (58) für den aktuellen Kurvenradius (R3) des Anhängers (2) verrechnet werden zu einem Soll-Stellsignal (62) an einen Aktor (64), der Bestandteil einer Vorrichtung zur Tilgung von Schwingungen des Anhängers (2) oder von Bauteilen des Anhängers (2) ist.

13. Verfahren nach einem der vorhergehenden Ansprüche, **dadurch gekennzeichnet, dass** eine Konfigurationsmöglichkeit vorgesehen ist, um gespeicherte Daten für Abstände (L1, L2, L3, L4) zwischen Drehpunkten (B, C, D, E, F) abzuändern.

14. Verfahren nach einem der vorhergehenden Ansprüche, **dadurch gekennzeichnet, dass** die Ausrichtung des Längsvektors des Zugfahrzeuges (22) definiert ist als Funktion aus der Drehwinkel - und/oder Wegstreckendifferenz der Räder (4, 6) des Anhängers (2) unter Zuhilfenahme der resultierenden Wegstrecke (12) im gemessenen Zeitintervall als Mittelwert der Drehwinkel (34) und/oder Wegstrecken (12) und dem Abstand der Achse (8) des Anhängers (2) zur Hinterachse (24) oder zum Drehpunkt (C) in der Mitte der Hinterachse (24) des Zugfahrzeuges (22).

15. Verfahren nach einem der vorhergehenden Ansprüche, **dadurch gekennzeichnet, dass** sich der Kurvenradius (R1, R2) des Zugfahrzeuges (22) um seinen zentralen Drehpunkt ergibt als Funktion aus der Ausrichtung des Längsvektors des Zugfahrzeuges (22), dem Abstand der Anhängerkupplung (28) zum Drehpunkt (C) der Hinterachse (24) und dem Kurvenradius des Anhängers (2).

16. Anhänger (2), der mit einer Vorrichtung ausgestattet ist, die ein Verfahren zur Ermittlung eines Kurvenradiusses (R3) eines an ein Zugfahrfahrzeug (22) angehängten und von diesem bewegten Anhängers (2) verwendet, **dadurch gekennzeichnet, dass** das Verfahren nach einem der vorhergehenden Ansprüche ausgestaltet ist.

## Claims

1. A method for determining a curve radius (R3) of a trailer (2) hitched to a traction vehicle (22) and moved by the same, having a computer unit (14), which is connected to a sensor system (50) which transmits sensor data (52) regarding current movements of the trailer (2) to the computer unit (14) and which are taken into account by the computer unit (14) when determining the curve radius (R3), wherein the measuring sensor system comprises sensors (10) with which rotation angles (34) and/or distances (12) covered in a time interval of first and second wheels (4, 6) located on opposite first and second sides (3, 5) of the trailer (2) are measured, the first sensor value from the first wheel (4) on the first side (3) of the trailer (2) is offset with the second sensor value from the second wheel (6) on the second side (5) of the trailer (2) in order to form a calculated value (56) and the calculated value (56) is computed by the computer unit (14) taking into account a value (51) for the track width (16) of the first and second wheels (4, 6) compared to one another to form a value (58) for the current curve radius (R3) of the trailer (2), **characterised in that** the value (58) for the current curve radius (R3) of the trailer (2) is computed to form a setpoint adjusting signal (62) to an actuator (64), which is part of a device for steering the trailer (2) and the device for steering the trailer (2) comprises an angle of rotation sensor (72) with which values for the respective current steering angle of the steering device are determined, the determined values of the angle of rotation sensor (72) are transmitted to the computer unit (14), the computer unit (14) compares the values of the angle of rotation sensor (72) with the setpoint adjusting signals (62) and upon a differential between the values of the angle of rotation sensor (72) and the setpoint adjusting signal (62), generates a corrective value by which the setpoint adjusting signal (62) is changed.

2.  The method according to Claim 1, **characterised in that** in the computation the computer unit (14) takes into account the movement direction of the trailer (2) and/or of the first and second wheels (4, 6).

3.  The method according to Claim 1 or 2, **characterised in that** the first wheel (4) and the second wheel (6) belong to a common axle (8).

4.  The method according to any one of the preceding claims, **characterised in that** the computer unit (14) takes into account a sensor value for the speed with which the trailer (2) is moved.

5.  The method according to any one of the preceding claims, **characterised in that** the computer unit (14) is connected via an interface (66) to an external device (68) which generates a path signal (70) transmitting it to the computer unit (14), the computer unit (14) compares the transmitted path signal (70) with a calculated value which has been determined from the sensor values for the angle of rotation (34) and/or the distance (12) covered in a time interval, and upon a differential between the path signal (70) and the value calculated from the sensor values, generates a corrective signal with which the sensor data and/or the calculated value are offset.

6.  The method according to any one of the preceding claims, **characterised in that** the computer unit (14) for determining the calculated value uses software-supported probabilistic filters.

7.  The method according to any one of the preceding claims, **characterised in that** the first and second wheel (4, 6) are actively steered.

8.  The method according to any one of the preceding claims, **characterised in that** multiple values (58) determined sequentially in time for the current curve radius (R3) of the trailer (2) are stored in an electronic memory (60) and compared with one another by the computer unit (14).

9.  The method according to any one of the preceding claims, **characterised in that** as sensors (10) active or passive rotary wheel speed sensors are used.

10. The method according to Claim 1, **characterised in that** when a curve is negotiated the computer unit (14), besides the curve radius (R3) of the trailer (2), also determines from further geometrical data of the combination the curve radius (R1, R2) of the traction vehicle (22) and computates the setpoint adjusting signals (62) to the actuator of the device for steering the trailer (2) so that the curve radius (R1, R2) of the trailer (2) aligns with the curve radius (R3) of the traction vehicle (22).

11. The method according to any one of the preceding claims, **characterised in that** when a curve is negotiated, the computer unit (14), besides the curve radius (R3) of the trailer (2), also determines from further geometrical data of the combination, the curve radius (R4) of implements (32) on the trailer (2) and calculates the setpoint adjusting signals (62) to the actuator of the device for steering the trailer (2) so that the curve radius (R4) of the implements (32) aligns with the curve radius (R1, R2) of the traction vehicle (22).

12. The method according to any one of the preceding claims, **characterised in that** the sensor values or the value (58) for the current curve radius (R3) of the trailer (2) are offset to form a setpoint adjusting signal (62) to an actuator (64) which is part of a device for damping vibrations of the trailer (2) or of components of the trailer (2).

13. The method according to any one of the preceding claims, **characterised in that** a configuration possibility is provided in order to modify stored data for distances (L1, L2, L3, L4) between fulcrums (B, C, D, E, F).

14. The method according to any one of the preceding claims, **characterised in that** the orientation of the longitudinal vector of the traction vehicle (22) is defined as function from the angle of rotation and/or distance differential of the wheels (4, 6) of the trailer (2) with the help of the resulting distance (12) in the measured time interval as mean value of the angles of rotation (34) and/or distances (12) and the distance of the axle (8) of the trailer (2) to the rear axle (24) or to the fulcrum (C) in the centre of the rear axle (24) of the traction vehicle (22).

15. The method according to any one of the preceding claims, **characterised in that** the curve radius (R1, R2) of the traction vehicle (22) about its central fulcrum is obtained as a function from the orientation of the longitudinal vector of the traction vehicle (22), the distance of the trailer coupling (28) to the fulcrum (C) of the rear axle (24) and the curve radius of the trailer (2).

16. A trailer (2), which is equipped with a device which uses a method for determining a curve radius (R3) of a trailer (2) hitched to a traction vehicle (22) and moved by the same, **characterised in that** the method is configured according to any one of the preceding claims.


**Revendications**

1. Procédé de détermination d'un rayon de virage (R3) d'une remorque (2) attelée à un véhicule tracteur (22) et déplacée par celui-ci avec une unité de calcul (14), qui est reliée à un système de détection de mesure (50), qui transmet les données de détection (52) concernant les mouvements réels de la remorque (2) à l'unité de calcul (14) et qui sont prises en considération par l'unité de calcul (14) lors de la détermination du rayon de virage (R3), sachant que le système de détection de mesure comporte des capteurs (10), avec lesquels l'angle de rotation (34) et/ou les distances (12) parcourus dans un intervallle de temps par les premières et deuxièmes roues (4, 6) se trouvant sur les premiers et deuxièmes côtés opposés (3, 5) de la remorque (2) sont mesurés, la première valeur de détection de la première roue (4) sur le premier côté (3) de la remorque (2) est compensée avec la deuxième valeur de détection de la deuxième roue (6) sur le deuxième côté (5) de la remorque (2) pour former une valeur de calcul (56) et la valeur de calcul (56) est compensée par l'unité de calcul (14) en tenant compte d'une valeur (51) pour l'écartement des roues (16) des premières et deuxièmes roues comparées entre elles (4, 6) par rapport à une valeur (58) pour le rayon de virage réel (R3) de la remorque (2), **caractérisé en ce que**
la valeur (58) est compensée pour le rayon de virage réel (R3) de la remorque (2) par rapport à un signal de réglage théorique (62) sur un actionneur (64), qui est partie constituante d'un dispositif pour la direction de la remorque (2) et le dispositif de direction de la remorque (2) comporte un capteur d'angle de direction (72), avec lequel les valeurs pour l'angle de braquage respectivement réel du système de direction sont déterminées, les valeurs déterminées du capteur d'angle de direction (72) sont transmises à l'unité de calcul (14), l'unité de calcul (14) compare les valeurs du capteur d'angle de direction (72) aux signaux de réglage théoriques (62) et en cas de différence entre les valeurs du capteur d'angle de direction (72) et le signal de réglage théorique (62) génère une valeur de correction avec laquelle le signal de réglage théorique (62) est modifié.

2. Procédé selon la revendication 1, **caractérisé en ce que** l'unité de calcul (14) prend en considération, lors du calcul, de compensation, la direction de déplacement de la remorque (2) et/ou des premières et deuxièmes roues (4, 6) .

3. Procédé selon la revendication 1 ou 2, **caractérisé en ce que** la première roue (4) et la deuxième roue (6) d'un essieu commun (8) sont correspondantes.

4. Procédé selon l'une quelconque des revendications précédentes, **caractérisé en ce que** l'unité de calcul (14) prend en considération une valeur de détection pour la vitesse à laquelle la remorque (2) est déplacée.

5. Procédé selon l'une quelconque des revendications précédentes, **caractérisé en ce que** l'unité de calcul (14) est reliée par une interface (66) à un appareil externe (68), qui génère un signal de déplacement (70) et transmet celui-ci à l'unité de calcul (14), l'unité de calcul (14) compare le signal de déplacement (70) transmis à une valeur calculée, qui a été déterminée à partir des valeurs de détection pour l'angle de rotation (34) et/ou la distance de déplacement (12) parcourus dans un intervalle de temps et génère un signal de correction en cas de différence entre le signal de déplacement (70) et la valeur calculée à partir des valeurs de détection , avec lequel les données de détection et/ou la valeur de calcul sont compensées.

6. Procédé selon l'une quelconque des revendications précédentes, **caractérisé en ce que** l'unité de calcul (14) utilise des filtres de probabilité informatiques pour déterminer la valeur de calcul.

7. Procédé selon l'une quelconque des revendications précédentes, **caractérisé en ce que** la première et la deuxième roue (4, 6) sont dirigées de façon active.

8. Procédé selon l'une quelconque des revendications précédentes, **caractérisé en ce que** plusieurs valeurs (58) déterminées les unes derrière les autres dans le temps pour le rayon de virage réel (R3) de la remorque (2) sont mémorisées dans une mémoire électronique (60) et sont comparées entre elles par l'unité de calcul (14).

9. Procédé selon l'une quelconque des revendications précédentes **caractérisé en ce que** des capteurs de vitesse de roue actifs ou passifs sont utilisés en tant que capteurs (10).

10. Procédé selon la revendication 1, **caractérisé en ce que** l'unité de calcul (14) détermine également le rayon de virage (R1, R2) du véhicule tracteur (22) pour un passage en virage en plus du rayon de virage (R3) de la remorque (2) à partir d'autres données géométriques de l'attelage et calcule les signaux de réglage théoriques (62) sur l'actionneur du dispositif de direction de la remorque (2) de telle sorte que le rayon de virage (R1, R2) de la remorque (2) s'adapte au rayon de virage (R3) du véhicule tracteur (22).

11. Procédé selon l'une quelconque des revendications précédentes, **caractérisé en ce que** l'unité de calcul (14) détermine également le rayon de virage (R4) des outils de travail (32) sur la remorque (2) pour un passage en virage en plus du rayon de virage (R3) de la remorque (2) à partir d'autres données géométriques de l'attelage et calcule les signaux de réglage théoriques (62) sur l'actionneur du dispositif de direction de la remorque (2) de telle sorte que le rayon de virage (R4) des outils de travail (32) ) s'adapte au rayon de virage (R1, R2) du véhicule tracteur (22).

12. Procédé selon l'une quelconque des revendications précédentes, **caractérisé en ce que** les valeurs de détection ou la valeur (58) pour la rayon de virage réel (R3) de la remorque (2) sont compensées par rapport à un signal de réglage théorique (62) sur un actionneur (64), qui fait partie d'un dispositif d'amortissement des oscillations de la remorque (2) ou des composants de la remorque (2).

13. Procédé selon l'une quelconque des revendications précédentes, **caractérisé en ce qu'une** possibilité de configuration est prévue pour modifier les données mémorisées concernant les distances (L1, L2, L3, L4) entre les points de rotation (B, C, D, E, F).

14. Procédé selon l'une quelconque des revendications précédentes, **caractérisé en ce que** l'orientation du vecteur longitudinal du véhicule tracteur (22) est définie en tant que fonction à partir de la différence entre l'angle de rotation et/ou la distance parcourue des roues (4, 6) de la remorque (2) à l'aide de la distance parcourue résultante (12) dans l'intervalle de temps mesuré en tant que valeur moyenne des angles de rotation (34) et/ou des distances parcourues (12) et la distance entre l'essieu (8) de la remorque (2) et l'essieu arrière (24) ou par rapport au point de rotation (C) au centre de l'essieu arrière (24) du véhicule tracteur (22).

15. Procédé selon l'une quelconque des revendications précédentes, **caractérisé en ce que** le rayon de virage (R1, R2) du véhicule tracteur (22) autour de son point de rotation central résulte comme fonction de l'orientation du vecteur longitudinal du véhicule tracteur (22), de la distance entre le dispositif d'attelage de remorque (28) et du point de rotation (C) de l'essieu arrière (24) et du rayon de virage de la remorque (2).

16. Remorque (2), qui est dotée d'un dispositif, qui utilise un procédé de détermination d'un rayon de virage (R3) d'une remorque (2) attelée à un véhicule tracteur (22) et déplacée par celui-ci, **caractérisé en ce que** le procédé est configuré selon l'une quelconque des revendications précédentes.

Fig. 1

Fig. 2

Fig. 3

EP 3 781 458 B1

Fig. 4

# Fig. 5A

6

34a

# Fig. 5B

34b

4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2145813 A1
- DE 19942034 A1
- EP 2679470 B1
- EP 3090922 A1
- DE 102017205291 A1
- WO 2016058595 A1